(19) Europäisches Patentamt
European Patent Office
Office européen des brevets

(11) **EP 3 842 347 A1**

(12) **EUROPEAN PATENT APPLICATION**

(43) Date of publication:
**30.06.2021 Bulletin 2021/26**

(51) Int Cl.:
**B64F 5/60** (2017.01)  **F01D 21/00** (2006.01)
**F02C 9/44** (2006.01)  **B64D 37/00** (2006.01)

(21) Application number: **20216401.8**

(22) Date of filing: **22.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **26.12.2019 US 201962953675 P**

(71) Applicant: **Bombardier Inc.**
**Dorval QC H4S1Y9 (CA)**

(72) Inventors:
- **BLACKLOCK, Carlos L. Jr.**
  **Derby, Kansas 67037-3442 (US)**
- **APONSO, Gayanath T. G.**
  **Bel Air, Kansas 67220 (US)**
- **TIESZEN, Joel J.**
  **Wichita, Kansas, 67220 (US)**
- **DODDS, Kevin R.**
  **Wellington, Kansas 67152 (US)**
- **MILLER, William Edward**
  **Wichita, Kansas 67226 (US)**

(74) Representative: **HGF**
**1 City Walk**
**Leeds LS11 9DX (GB)**

(54) **SYSTEM AND METHOD FOR AUTOMATICALLY INITIATING STOPPING OF AN AIRCRAFT ENGINE**

(57) Methods for automatically initiating stopping of an engine (14A, 14B) of an aircraft (20) at a desired engine-stop speed are disclosed. An embodiment of the method includes receiving data indicative of a current speed and a current acceleration of the aircraft, the current speed being different from the engine-stop speed of the aircraft. Using the received data, an initiation time at which to initiate stopping of the engine to cause the engine to stop substantially at the engine-stop speed of the aircraft is determined. Stopping of the engine is automatically initiated at the initiation time.

EP 3 842 347 A1

**Description**

TECHNICAL FIELD

The present disclosure relates generally to aircraft, and more particularly to methods and systems for initiating stopping of an engine of an aircraft at a desired speed of the aircraft.

BACKGROUND

The minimum control speed on the ground ($V_{MCG}$) of an airplane is considered a calibrated airspeed during the takeoff run at which, when a critical engine of the airplane is suddenly made inoperative, it is possible to maintain control of the airplane using the rudder control alone (without the use of nosewheel steering) to enable the takeoff to be safely continued using normal piloting skill. In the determination of $V_{MCG}$, assuming that the path of the airplane accelerating with all engines operating is along the centerline of the runway, its path from the point at which the critical engine is made inoperative to the point at which recovery to a direction parallel to the centerline is completed may not deviate more than a prescribed lateral deviation (e.g., 30 feet or 9.1 metres) from the centerline at any point.
Determining $V_{MCG}$ involves repeated test runs during which an engine of the airplane is shut off at different speeds and the resulting lateral deviations of the airplane is determined. Determining a relatively accurate value of $V_{MCG}$ can require extensive testing, which can be time consuming and expensive. Improvement is desirable.

SUMMARY

In one aspect, the disclosure describes a method for automatically initiating stopping of an engine of an aircraft at a desired engine-stop speed of the aircraft during testing of the aircraft. The method comprises:

receiving data indicative of a current speed and a current acceleration of the aircraft, the current speed being different from the engine-stop speed of the aircraft;

determining, using the received data, an initiation time at which to initiate stopping of the engine to cause the engine to stop substantially at the engine-stop speed of the aircraft; and

automatically initiating stopping of the engine at the initiation time.

Determining the initiation time may include estimating a future speed of the aircraft using the received data and an expected response time between the initiation time and the stopping of the engine. The initiation time may correspond to a time when the estimated future speed substantially corresponds to the engine-stop speed of the aircraft.
The future speed may be estimated based on the current speed and an integration of the current acceleration over the expected response time.
The method may comprise iteratively receiving the data and estimating the future speed of the aircraft to determine the initiation time.
The method may comprise iteratively receiving the data and using the data to determine the initiation time.
The method may comprise initiating stopping of the engine when the aircraft is on the ground and is propelled by another engine.
The method may comprise initiating stopping of the engine when the aircraft is accelerating.
Embodiments may include combinations of the above features.
In another aspect, the disclosure describes a system for automatically initiating stopping of an engine of an aircraft at a desired engine-stop speed of the aircraft during testing of the aircraft. The system comprises:

one or more data processors; and

non-transitory machine-readable memory storing instructions executable by the one or more data processors and configured to cause the one or more data processors to:

determine, using data indicative of a current speed of the aircraft different from the engine-stop speed and a current acceleration of the aircraft, an initiation time at which to initiate stopping of the engine to cause the engine to stop substantially at the engine-stop speed of the aircraft; and

automatically initiate stopping of the engine at the initiation time.

The instructions may be configured to cause the one or more data processors to, in determining the initiation time, estimate a future speed of the aircraft using the received data and an expected response time between the initiation time and the stopping of the engine. The initiation time may correspond to a time when the estimated future speed substantially corresponds to the engine-stop speed of the aircraft.

The instructions may be configured to cause the one or more data processors to estimate the future speed based on the current speed and an integration of the current acceleration over the expected response time.

The instructions may be configured to cause the one or more data processors to iteratively estimate the future speed of the aircraft to determine the initiation time using updated data indicative of the current speed and the current acceleration.

The instructions may be configured to cause the one or more data processors to iteratively determine the initiation time using updated data indicative of the current speed and the current acceleration.

Initiating stopping of the engine may include causing a controller of the engine to stop the engine.

The system may comprise a relay operatively coupled to the one or more data processors, wherein:

the relay is normally closed;

the relay is disposed in series between a run switch and the controller of the engine; and

initiating stopping of the engine includes causing the relay to open.

The system may comprise one or more user input devices for selecting the engine to be stopped out of a plurality of engines of the aircraft.

The system may comprise a user interface for specifying the desired engine-stop speed of the aircraft.

Embodiments may include combinations of the above features.

In a further aspect, the disclosure describes a method of operating a multi-engine aircraft when determining a minimum control speed on the ground ($V_{MCG}$) of the aircraft at which a lateral deviation of the aircraft does not exceed a prescribed lateral distance after an engine failure. The method comprises:

while the aircraft is accelerating on the ground and is propelled by a plurality of engines, receiving data indicative of a current speed and a current acceleration of the aircraft, the current speed being lower than an estimated $V_{MCG}$ of the aircraft; and

based on the received data, automatically initiating stopping of one of the plurality of engines to cause the one engine to stop substantially at the estimated $V_{MCG}$ of the aircraft while the aircraft is propelled by the remaining of the plurality of engines.

The estimated $V_{MCG}$ of the aircraft may be a first estimated $V_{MCG}$ of the aircraft. When the lateral deviation of the aircraft after stopping the one engine is different from the prescribed lateral distance, the method may further comprise:

while the aircraft is on the ground, accelerating and propelled by the plurality of engines, receiving data indicative of the current speed and the current acceleration of the aircraft, the current speed being lower than a second estimated $V_{MCG}$ of the aircraft that is different from the first estimated $V_{MCG}$ of the aircraft; and

based on the received data, automatically initiating stopping of the one or other engine to cause the one or other engine to stop substantially at the second estimated $V_{MCG}$ of the aircraft while the aircraft is propelled by the remaining of the plurality of engines.

When the lateral deviation of the aircraft after stopping the one or other engine is greater than the prescribed lateral distance, the second estimated $V_{MCG}$ of the aircraft may be greater than the first estimated $V_{MCG}$ of the aircraft.

When the lateral deviation of the aircraft after stopping the one or other engine is smaller than the prescribed lateral distance, the second estimated $V_{MCG}$ of the aircraft may be lower than the first estimated $V_{MCG}$ of the aircraft.

The method may comprise:

determining, using the received data, an initiation time at which to initiate stopping of the one engine to cause the one engine to stop substantially at the estimated VMCG of the aircraft, determining the initiation time includes estimating a future speed of the aircraft using the received data and an expected response time between the initiation time and the stopping of the one engine, the initiation time corresponding to a time when the estimated future speed substantially corresponds to the estimated $V_{MCG}$; and

automatically initiating stopping of the one engine at the initiation time.

The method may comprise estimating the future speed based on the current speed and an integration of the current acceleration over the expected response time.

The method may comprise iteratively receiving the data and estimating the future speed of the aircraft to determine the initiation time.

Embodiments may include combinations of the above features.

Further details of these and other aspects of the subject matter of this application will be apparent from the detailed description included below and the drawings.

DESCRIPTION OF THE DRAWINGS

Reference is now made to the accompanying drawings, in which:

FIG. 1 is a top plan view of an exemplary aircraft including a system for automatically initiating stopping of an engine of the aircraft at a desired speed of the aircraft;

FIGS. 2A-2C graphically illustrate a method for determining a minimum control speed on the ground ($V_{MCG}$) of the aircraft;

FIG. 3 is a schematic illustration of an exemplary integration of the system of FIG. 1 into an aircraft;

FIG. 4 is a schematic illustration of an exemplary embodiment of the system of FIG. 1;

FIG. 5 depicts a flow chart of an exemplary method of initiating stopping of an engine of an aircraft at a desired engine-stop speed of the aircraft;

FIG. 6 depicts a flow chart of an exemplary method of determining an initiation time to initiate stopping of an engine of the aircraft; and

FIG. 7 depicts a flow chart of an exemplary method of operating a multi-engine aircraft when determining a minimum control speed on the ground ($V_{MCG}$) of the aircraft.

DETAILED DESCRIPTION

The following disclosure describes systems and methods useful in automatically stopping (i.e., making inoperative) an engine of an aircraft at a desired speed of the aircraft. One disclosed method includes using a current speed, current acceleration, and propagation delay associated with aircraft systems to determine an initiation time at which to initiate stopping of the engine to cause the engine to stop substantially at the desired speed of the aircraft, and, automatically initiating stopping of the engine at the initiation time. Determining the initiation time may include estimating a future speed of the aircraft using the current speed, the current acceleration and an expected response time between the initiation time and the stopping of the engine so that the initiation time corresponds to a time when the estimated future speed substantially corresponds to (e.g., within an acceptable range of) the desired engine-stop speed of the aircraft.

The systems and methods described herein may be used during testing of an aircraft to determine the minimum control speed on the ground ($V_{MCG}$) of the aircraft. The use of the systems and methods described herein may, in some situations, increase safety of $V_{MCG}$ testing, improve the accuracy of the speed at which the engine is stopped and improve the repeatability of $V_{MCG}$ testing so that the number of $V_{MCG}$ tests may be reduced and the cost of $V_{MCG}$ testing may be reduced compared to other methods where stopping of the engine is initiated manually. The method and system can also be adapted to shut down the engine for a specific duration

The term "substantially" as used herein may be applied to modify any quantitative representation which could permissibly vary without resulting in a change in the basic function to which it is related.

Aspects of various embodiments are described through reference to the drawings.

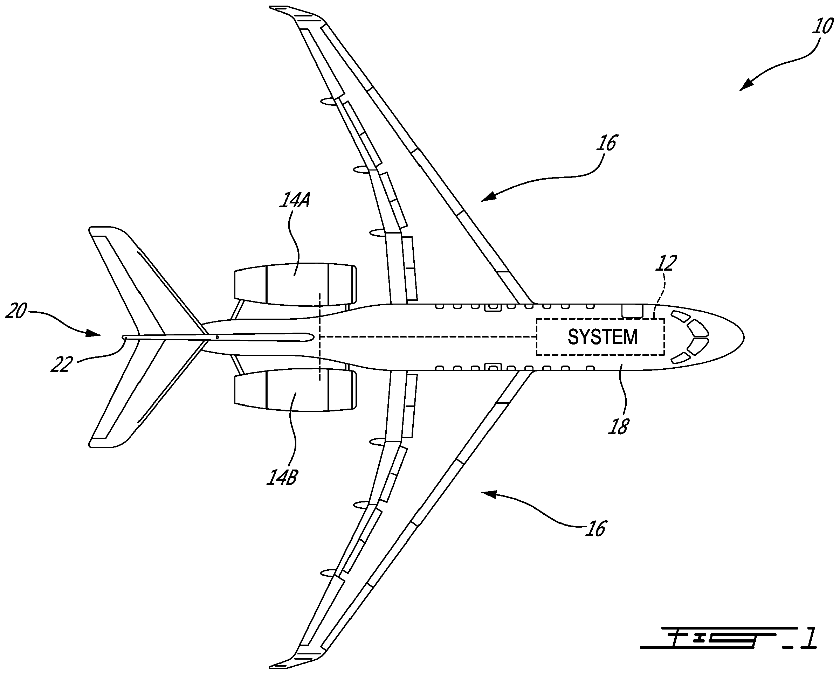

FIG. 1 is a top plan view of an exemplary multi-engine aircraft 10 including system 12 for automatically initiating stopping of an engine 14A or 14B (also referred generally herein as "engines 14") of aircraft 10 at a desired speed of aircraft 10. Aircraft 10 may be any type of aircraft such as corporate, private, commercial and passenger aircraft suitable for civil aviation. For example, aircraft 10 may be a turboprop aircraft, a (e.g., ultra-long range) business jet or a narrow-body, twin-engine jet airliner. Aircraft 10 may be a fixed-wing aircraft. Aircraft 10 may also comprise one or more wings 16, fuselage 18 and empennage 20. One or more of engines 14 may be mounted to fuselage 18. Alternatively, or in addition, one or more of engines 14 may be mounted to wings 16. It is understood that system 12 and methods described herein may be integrated into an aircraft having more than two thrust-producing engines 14.

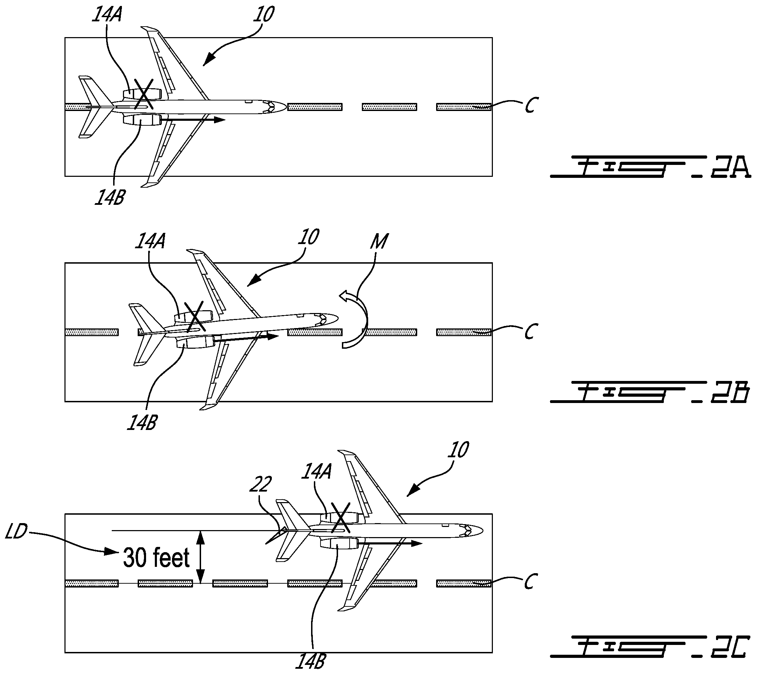

FIGS. 2A-2C graphically illustrate the general steps in determining a $V_{MCG}$ of aircraft 10. In reference to FIG. 2A, aircraft 10 is in a takeoff run where aircraft 10 is on the ground and following centerline C of the runway when left engine 14A is suddenly stopped (i.e., made inoperative) while takeoff power output is maintained by engine 14B and aircraft 10 continues to accelerate. As explained further below, left engine 14A may be stopped automatically in response to a command issued by system 12 in order to emulate a sudden failure of left engine 14A. In reference to FIG. 2B, when left engine 14A is stopped, aircraft 10 may tend to deviate laterally from centerline C due to moment M created by an imbalance in output thrust between left engine 14A and right engine 14B. FIG. 2C shows rudder 22 being deflected to counteract moment M in order to attempt to avoid excessive lateral deviation LD from centerline C. Since the effectiveness of rudder 22 may depend of the airspeed of aircraft 10, the amount of lateral deviation LD may depend on the speed of aircraft 10 at which left engine 14A is stopped. The engine-stop speed of aircraft 10 at which the amount of lateral deviation LD is equal to or within an acceptable range from, but not exceeding, a prescribed allowable amount of lateral deviation LD such as 30 feet (9.1 metres) for example, may correspond to $V_{MCG}$.

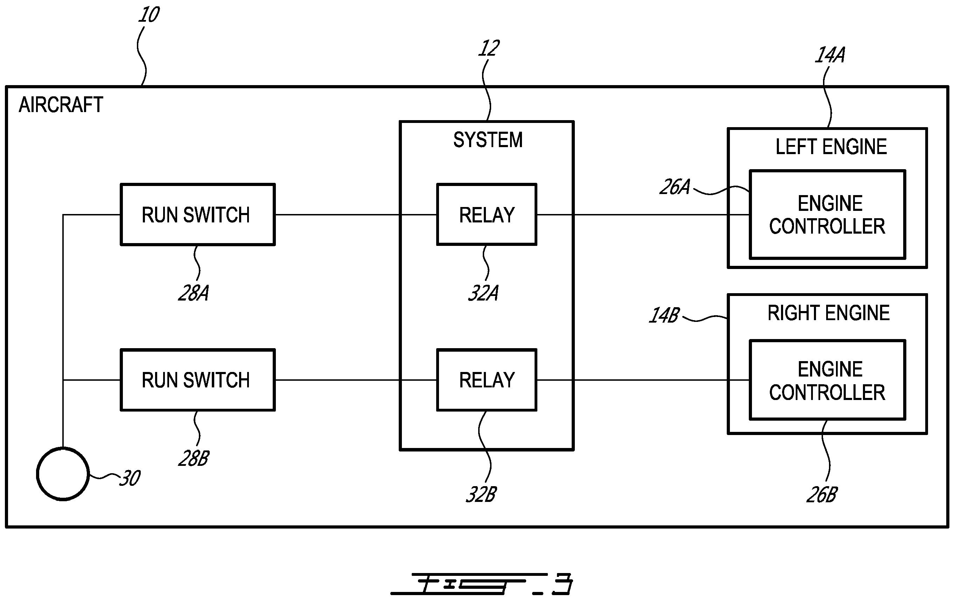

FIG. 3 is a schematic illustration of an exemplary integration of system 12 into aircraft 10. Both left engine 14A and right engine 14B of aircraft 10 may have substantially identical power output ratings. Each engine 14A, 14B may be controlled by a respective engine controller 26A, 26B. In some embodiments, engine controllers 26A and 26B may each be of the type sometimes referred to as an electronic engine controller (EEC), which may be part of a full authority digital engine (or electronics) control (FADEC). A FADEC may include engine controller 26A or engine controller 26B and related accessories that control all aspects of aircraft engine performance. Engine controllers 26A and 26B may each include one or more digital computers or other data processor(s).

Aircraft 10 may include run switches 28A and 28B respectively associated with left engine 14 and right engine 14B. Run switches 28A and 28B may be disposed in a cockpit of aircraft 10 and may be manually actuatable by a pilot of aircraft 10. Run switches 28A and 28B may be operatively disposed between electric (e.g., voltage) source 30 and respective engine controllers 26A and 26B. Closing run switches 28A and 28B to establish electrical connectivity between respective engine controllers 26A, 26B and electrical source 30 may electronically indicate to engine controllers 26A, 26B that their respective left and right engines 14A, 14B are intended to operate. In some embodiments, run switches 28A and 28B may be toggle switches. Opening one or both run switches 28A and 28B to electrically disconnect electrical source 30 from one or both respective engine controllers 26A and 26B may electronically indicate to engine controllers 26A and 26B that left engine 14A and/or right engine 14B are to be stopped. Accordingly, the loss of the electronic signal (e.g., voltage drop) from electrical source 30 to engine controllers 26A and/or 26B may cause engine controllers 26A and/or 26B to initiate a shut down of their respective engines 14A and/or 14B by ceasing fuel flow to the combustor(s) of engines 14A and/or engine 14B for example.

As explained further below, system 12 may be configured to automatically determine when to initiate a stopping of one of engines 14A, 14B based on one or more inputs, and provide an output signal to relay 32A or relay 32B accordingly, depending on configuration of Engine Select Switches 54A and 54B. Engine Select Switches 54A and 54B are configured in an Exclusive-Or logic configuration so that only one engine 14A or 14B will be stopped, preventing simultaneous shutdown of both engines 14A and 14B which would create a significant safety issue during aircraft operation. Relays 32A and 32B may be four pole double throw (4PDT) relays that are disposed in series or in parallel with run switches 28A, 28B as required to send the appropriate signals to respective engine controllers 26A, 26B. The output signal provided by system 12 may be configured to cause the applicable relay 32A or relay 32B to become open and electrically disconnect electrical source 30 from the applicable engine controller 26A or 26B. The opening of relay 32A or relay 32B may mimic the opening or closing of respective run switch 28A or run switch 28B by causing the applicable engine controller 26A or 26B to shut down the applicable engine 14A or 14B. Alternatively, the system could be used to interface with a valve in line with the fuel system to enable an engine cut by shutting down fuel to the selected test engine

The use of relays 32A, 32B installed in the path of run switches 28A, 28B may facilitate the integration of system 12 into aircraft 10 for $V_{MCG}$ testing purposes and also facilitate the subsequent removal of system 12 from aircraft 10 without requiring significant modifications to aircraft 10. However, it is understood that other types of integrations of system 12 into aircraft 10 are possible. For example, instead of using relays 32A, 32B as illustrated herein, system 12 could be configured to provide an electronic signal directly to engine controllers 26A and/or 26B for the purpose of instructing engine controllers 26A and/or 26B to shut down their respective engines 14A or 14B at the appropriate time.

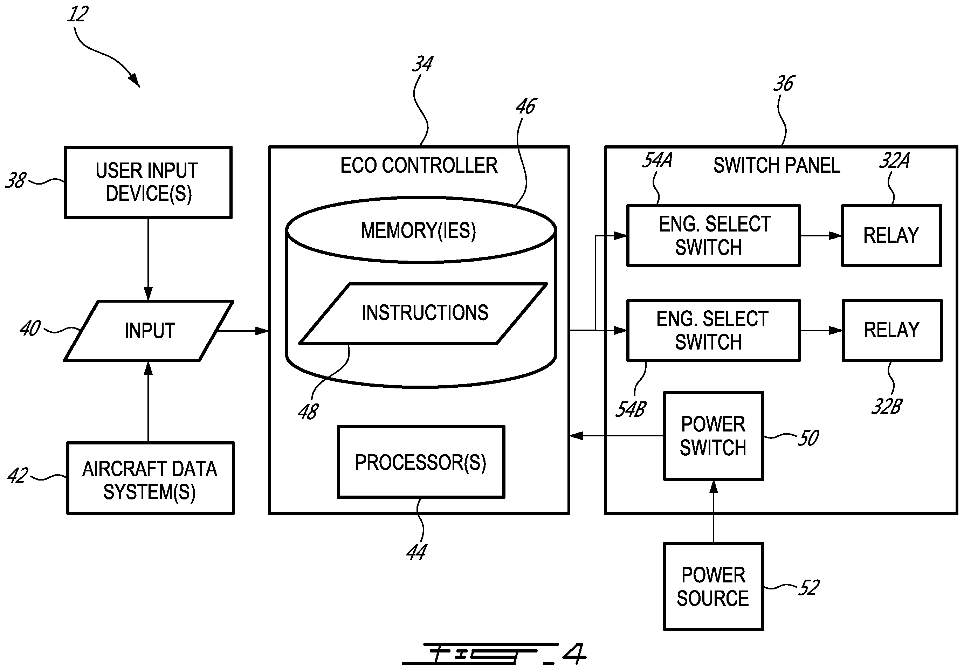

FIG. 4 is a schematic illustration of an exemplary embodiment of system 12. System 12 may include automatic engine cut-off (ECO) controller 34, switch panel 36 and one or more user input devices 38 (referred hereinafter in the singular). ECO controller 34 may be configured to receive input 40 (i.e. signals) from user input device 38 and/or one or more data systems 40 (referred hereinafter in the singular) via one or more communication terminals/ports. ECO controller 34 may include one or more data processors 44 (referred hereinafter in the singular) and one or more computer-readable memories 46 (referred hereinafter in the singular) storing machine-readable instructions 48 executable by data processor 44 and configured to cause data processor 44 to generate one or more outputs (e.g., signals) for causing the execution of one or more steps of the methods described herein. ECO controller 34 may be installed on a flight test equipment rack which may be onboard of aircraft 10.

Data processor 44 may include any suitable device(s) configured to cause a series of steps to be performed by ECO controller 34 so as to implement a computer-implemented process such that instructions 48, when executed by ECO controller 34 or other programmable apparatus, may cause the functions/acts specified in the methods described herein to be executed. Data processor 44 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 46 may include any suitable machine-readable storage medium. Memory 46 may include non-transitory computer readable storage medium such as, for example, but not limited to, an electronic, magnetic, optical, electromagnetic, infrared, or semiconductor system, apparatus, or device, or any suitable combination of the foregoing. Memory 46 may include a suitable combination of any type of computer memory that is located either internally or externally to ECO controller 34. Memory 46 may include any storage means (e.g. devices) suitable for retrievably storing machine-readable instructions 48 executable by data processor 44.

Various aspects of the present disclosure may be embodied as systems, devices, methods and/or computer program products. Accordingly, aspects of the present disclosure may take the form of an entirely hardware embodiment, an entirely software embodiment or an embodiment combining software and hardware aspects. Furthermore, aspects of the present disclosure may take the form of a computer program product embodied in one or more non-transitory computer readable medium(ia) (e.g., memory 46) having computer readable program code (e.g., instructions 48) embodied thereon. Computer program code for carrying out operations for aspects of the present disclosure in accordance with instructions 48 may be written in any combination of one or more programming languages. Such program code may be executed entirely or in part by ECO controller 34 or other data processing device(s). Based on the present disclosure, one skilled in the relevant arts could readily write computer program code for implementing the methods described herein.

Aircraft data system 42 may include an air data computer configured to compute current aircraft parameters (states) such as calibrated airspeed, acceleration, Mach number and altitude from acquired sensed data such as from a pitot-static system or inertial reference unit of aircraft 10 for example. Data from aircraft data system 42 may be communicated to ECO controller 34. The transmission of data from aircraft data system 42 may be commanded by data processor 44 based on machine-readable instructions 48. In some embodiments, ECO controller 34 may receive data indicative of a current speed and a current acceleration of aircraft 10 from aircraft data systems 40. ECO controller 34 may receive such data on a substantially continuous basis or intermittently so that the data may be available to ECO controller 34 substantially in real-time.

User input device 38 may be a portable electronic device having a graphical user interface (GUI) such as a desktop computer, laptop computer or a mobile device such as a tablet for example. User input device 38 may be configured to receive user inputs from an operator. Such user input may include a selection of which engine to be stopped out of a plurality of engines 14 of aircraft 10 and/or a $V_{MCG}$ testing parameter (e.g., an estimated $V_{MCG}$ to be used as an engine-stop speed, an expected response time between initiating stopping of the engine and an actual stopping of the engine). The user input data may be transmitted to ECO controller 34 via wired or wireless communication. The communication of data from user input device 38 to ECO controller 34 may be commanded by data processor 44 based on machine-readable instructions 48.

Based on input 40, ECO controller 34 may be configured to automatically issue an output signal to cause stopping of engine 14A or engine 14B of aircraft 10. The output signal may be transmitted from ECO controller 34, directly to one of engine controllers 26A, 26B, directly to one of relays 32A, 32B, or, to one of relays 32A, 32B via one of engine selection switches 54A, 54B. In some embodiments, switch panel 36 may be temporarily installed in the flight deck (e.g., pedestal region) of aircraft 10 during $V_{MCG}$ testing for example. ECO controller 34 may be hardwired to switch panel 36. Switch panel 36 may include power switch 50 (i.e., ON/OFF switch) operatively disposed between power source 52 and ECO controller 34 for selectively powering ECO controller 34.

Switch panel 36 may include one or more engine selection switches 54A, 54B. Engine selection switches 54A, 54B may be manually actuatable by an operator of aircraft 10 to preselect which of engines 14A, 14B is to be stopped during $V_{MCG}$ testing for example. In some embodiments, engine selection switches 54A, 54B may be toggle switches whereby: (1) closing engine select switch 54A will cause the output from ECO controller 34 to be directed to relay 32A and consequently cause left engine 14A to be stopped; and (2) closing engine select switch 54B will similarly cause the output from ECO controller 34 to be directed to relay 32B and consequently cause right engine 14B to be stopped. It is understood that, instead of having separate switches to select or deselect an engine 14 for stopping, a single selector switch such as a single pole double throw (SPDT) switch could replace both engine select switches 54A and 54B in some embodiments. Relays 32A and 32B may be integrated into switch panel 36 or may be separate from switch panel 36.

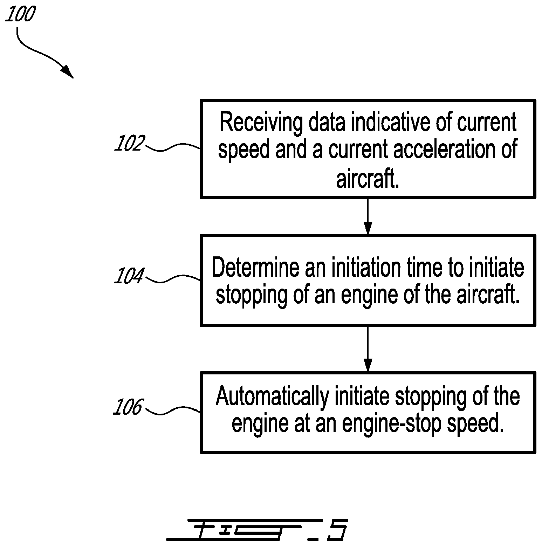

FIG. 5 is a flowchart illustrating an exemplary method 100 of initiating stopping of an engine 14A or 14B of aircraft 10 at a desired engine-stop speed of the aircraft 10. Method 100 may be performed using system 12 described herein or using another system. It is understood that aspects of method 100 may be combined with aspects of other methods described herein. In various embodiments, method 100 includes:

receiving data indicative of a current speed and a current acceleration of aircraft 10, the current speed being different from the desired engine-stop speed (see block 102);

determining, using the received data, an initiation time at which to initiate stopping of engine 14A or 14B to cause engine 14A or 14B to stop substantially at the desired engine-stop speed of aircraft 10 (see block 104); and

automatically initiating stopping of the engine 14A or 14B at the initiation time (see block 106).

In some embodiments, the method 100 may include iteratively receiving the data and using the data (see input 40 in FIG. 4) to determine the initiation time.

In reference to FIG. 4, data indicative of the current speed and the current acceleration of aircraft 10 may be received from aircraft data system 42 to which ECO controller 34 may be operatively coupled for data communication. The current speed may be a calibrated airspeed corresponding to an indicated airspeed corrected for instrument and position error. The acceleration may be an inertial acceleration acquired via an inertial reference unit of aircraft 10 for example. In other embodiments of the present invention, data indicative of ground speed can be used.

Initiating stopping of the applicable engine 14A or 14B may be carried out via relay 32A or relay 32B.

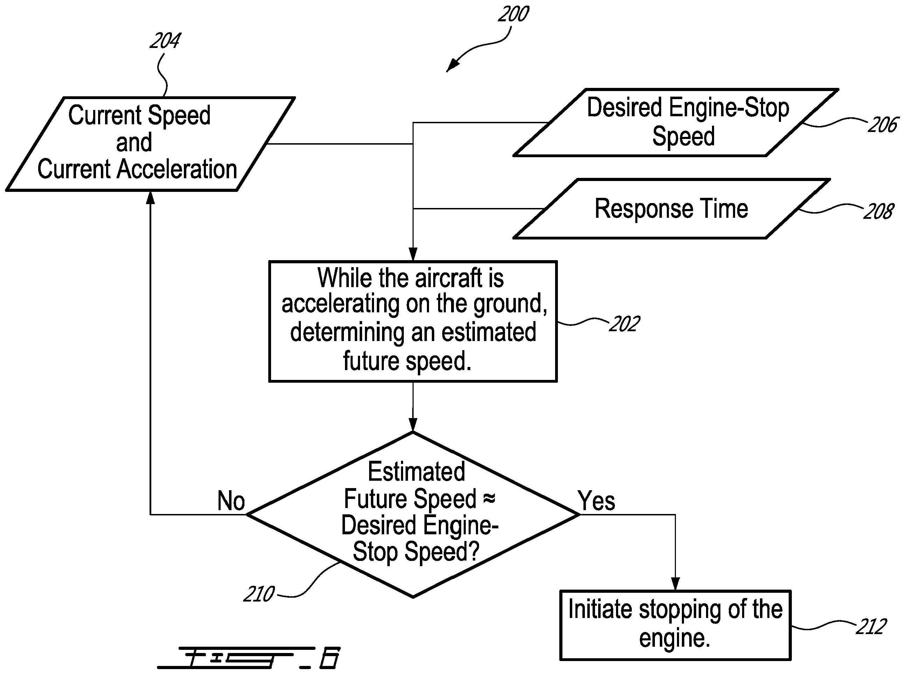

FIG. 6 depicts a flow chart of an exemplary method 200 of determining the initiation time at which initiate stopping of engine 14A or engine 14B of aircraft 10. Method 200 may be performed using system 12 described herein or using another system. Method 200 may be integrated with method 100 described above or other methods described herein. Determining the initiation time may include estimating a future speed of aircraft 10 while aircraft 10 is accelerating and on the ground such as during a take-off run for example (see block 202). The initiation time may be determined using the received data indicative of the current speed and current acceleration (see block 204), the desired engine-stop speed (see block 206) and the expected response time (see block 208) between the initiation time and the stopping of engine 14A or engine 14B. The expected response time may correspond to or include an expected time duration from ECO controller 34 issuing an output signal and the applicable engine 14A or 14B actually stopping producing thrust to emulate a sudden engine failure.

The data indicative of the current speed and current acceleration may be received from aircraft data system 42 substantially in real-time. The desired engine-stop speed and the expected response time may be received via user input device 38 and/or stored in memory 46 of ECO controller 34.

The initiation time may correspond to a time when the estimated future speed substantially corresponds to the desired engine-stop speed of aircraft 10. The estimated future speed may be iteratively computed/estimated over the course of at least part of the takeoff run when aircraft 10 is on ground, both engines 14A and 14B are operating (e.g., at maximum takeoff thrust (MTO)) and aircraft 10 is accelerating. The estimated future speed substantially corresponding to the desired engine-stop speed is intended to encompass situations where the estimated future speed is within an acceptable range of the desired engine-stop speed. For example, such acceptable range may be determined based on an expected variation of the estimated future speed from one iteration of method 200 to the next so that the initiation time is within the iteration expected to provide the estimated future speed closest to the desired engine-stop speed.

The estimated future speed of aircraft 10 may be an estimated speed of aircraft 10 at a future time that is substantially equal to the expected response time added to the current time. In some embodiments, the future speed may be estimated using equation 1 shown below:

$$(1) \quad Estimated\ Future\ Speed = \text{Current Speed} + (\text{Current Acceleration} \times \text{Expected Response Time})$$

In some embodiments, the future speed is estimated based on a current speed and an integration of acceleration over the expected response time.

When it is determined at decision block 210 that the estimated future speed is not substantially equal to the desired engine-stop speed, updated data indicative of the current speed and current acceleration may be received and the determination of the estimated future speed may be repeated at block 202. However, when it is determined at decision block 210 that the estimated future speed is substantially equal to the desired engine-stop speed, ECO controller 34 may issue an output signal to initiate stopping of engine 14A or engine 14B (see block 212) selected by the operator via switch panel 36 for example.

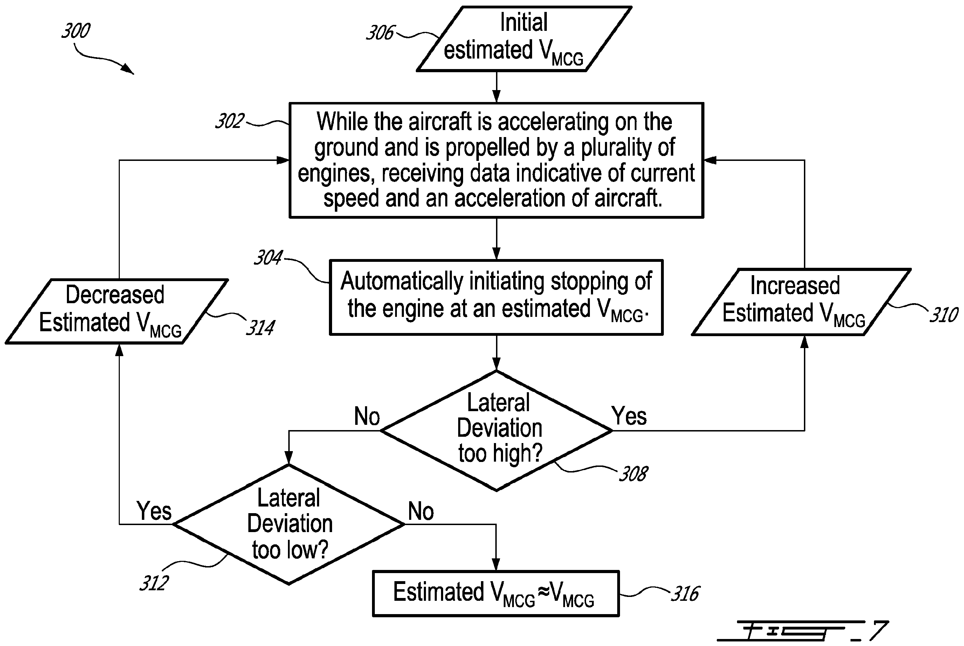

FIG. 7 depicts a flow chart of an exemplary method 300 of operating a multi-engine aircraft when determining a minimum control speed on the ground ($V_{MCG}$) of the aircraft. Method 300 may be performed using system 12 described herein or using another system. It is understood that aspects of method 300 may be combined with aspects of other methods described herein. For example, method 300 may include aspects of methods 100 and 200 described above. In various embodiments, method 300 includes:

while aircraft 10 is accelerating on the ground and is propelled by a plurality of engines 14A, 14B, receiving data indicative of a current speed and a current acceleration of aircraft 10, the current speed being lower than an estimated $V_{MCG}$ of the aircraft 10 (see block 302); and

based on the received data, automatically initiating stopping of one of engines 14A, 14B to cause the one engine 14A or 14B to stop substantially at the estimated $V_{MCG}$ of aircraft 10 while aircraft 10 is propelled by the remaining of engines 14A, 14B (see block 304).

In some embodiments, using the received data to automatically initiate stopping may include determining a suitable initiation time based on an estimated future speed as described above in relation to methods 100 and 200.

During $V_{MCG}$ testing, the desired engine-stop speed may be an estimated $V_{MCG}$ (see block 306) of aircraft 10 determined by simulation or modeling for example. Determining $V_{MCG}$ may be done in an iterative manner if required and require multiple test runs using different estimated $V_{MCG}$. For example, if the lateral deviation LD after a test run exceeds the maximum allowable lateral deviation (e.g., 30 feet or 9.1 metres) at decision block 308, then the estimated $V_{MCG}$ may be too low and another test run may be conducted using an increased estimated $V_{MCG}$ (see block 310). Alternatively, if the lateral deviation LD after the test run is lower than the maximum allowable lateral deviation (e.g., 30 feet or 9.1 metres) at decision block 312, then the estimated $V_{MCG}$ may be too high and another test run may be conducted using a decreased estimated $V_{MCG}$ (see block 314). When it is determined via decision blocks 308 and 312 that the lateral deviation LD is as close as possible to the maximum allowable lateral deviation without exceeding the maximum allowable lateral deviation for an estimated $V_{MCG}$, then that estimated $V_{MCG}$ is determined to be the $V_{MCG}$ of aircraft 10. The determination of $V_{MCG}$ may require one or multiple test runs and therefore one or more iterations of method 300.

The above description is meant to be exemplary only, and one skilled in the relevant arts will recognize that changes can be made to the embodiments described without departing from the scope of the invention disclosed. The present disclosure may be embodied in other specific forms without departing from the subject matter of the claims. The present disclosure is intended to cover and embrace all suitable changes in technology. Modifications which fall within the scope of the present invention will be apparent to those skilled in the art, in light of a review of this disclosure, and such modifications are intended to fall within the appended claims. Also, the scope of the claims should not be limited by the preferred embodiments set forth in the examples, but should be given the broadest interpretation consistent with the description as a whole.

**Claims**

1. A method for automatically initiating stopping of an (14A, 14B) of an aircraft (10) at a desired engine-stop speed of the aircraft (10) during testing of the aircraft (10), the method comprising:

   receiving data indicative of a current speed and a current acceleration of the aircraft (10), the current speed being different from the engine-stop speed of the aircraft (10);
   determining, using the received data, an initiation time at which to initiate stopping of the engine (14A, 14B) to cause the engine (14A, 14B) to stop substantially at the engine-stop speed of the aircraft (10); and
   automatically initiating stopping of the engine (14A, 14B) at the initiation time.

2. The method of claim 1, wherein determining the initiation time includes estimating a future speed of the aircraft (10) using the received data and an expected response time between the initiation time and the stopping of the engine, the initiation time corresponding to a time when the estimated future speed substantially corresponds to the engine-stop speed of the aircraft (10).

3. The method of claim 2, wherein the future speed is estimated based on the current speed and an integration of the current acceleration over the expected response time.

**4.** The method of claim 2 or claim 3, comprising iteratively receiving the data and estimating the future speed of the aircraft (10) to determine the initiation time.

**5.** The method of claim 1, comprising iteratively receiving the data and using the data to determine the initiation time.

**6.** The method of any one of claims 1 to 5, comprising initiating stopping of the (14A, 14B) when the aircraft (10) is on the ground and is propelled by another engine (14A, 14B).

**7.** A system for automatically initiating stopping of an engine (14A, 14B) of an aircraft (10) at a desired engine-stop speed of the aircraft (10) during testing of the aircraft (10), the system comprising:

one or more data processors (44); and
non-transitory machine-readable memory storing instructions executable by the one or more data processors (44) and configured to cause the one or more data processors (44) to:

determine, using data indicative of a current speed of the aircraft (10) different from the engine-stop speed and a current acceleration of the aircraft (10), an initiation time at which to initiate stopping of the engine (14A, 14B) to cause the engine (14A, 14B) to stop substantially at the engine-stop speed of the aircraft (10); and
automatically initiate stopping of the engine (14A, 14B) at the initiation time.

**8.** The system of claim 7, wherein the instructions are configured to cause the one or more data processors (44) to, in determining the initiation time, estimate a future speed of the aircraft (10) using the received data and an expected response time between the initiation time and the stopping of the engine, the initiation time corresponding to a time when the estimated future speed substantially corresponds to the engine-stop speed of the aircraft (10).

**9.** The system of claim 8, wherein the instructions are configured to cause the one or more data processors (44) to estimate the future speed based on the current speed and an integration of the current acceleration over the expected response time.

**10.** The system of claim 8 or claim 9, wherein the instructions are configured to cause the one or more data processors (44) to iteratively estimate the future speed of the aircraft (10) to determine the initiation time using updated data indicative of the current speed and the current acceleration.

**11.** The system of claim 7, wherein the instructions are configured to cause the one or more data processors (44) to iteratively determine the initiation time using updated data indicative of the current speed and the current acceleration.

**12.** The system of any one of claims 7 to 11, wherein initiating stopping of the engine (14A, 14B) includes causing a controller of the engine (14A, 14B) to stop the engine.

**13.** The system of claim 12, comprising a relay (32A, 32B) operatively coupled to the one or more data processors (44), wherein:

the relay (32A, 32B) is configurable to be normally open or normally closed;
the relay (32A, 32B) is disposed in series or in parallel between a run switch and the controller of the engine; and
initiating stopping of the engine (14A, 14B) includes causing the relay (32A, 32B) to actuate.

**14.** The system of any one of claims 7 to 13, comprising one or more user input devices (38) for selecting the engine (14A, 14B) to be stopped out of a plurality of engines (14A, 14B) of the aircraft (10).

**15.** The system of any one of claims 7 to 14, comprising a user interface for specifying the desired engine-stop speed of the aircraft (10).

10

14A

16

12

SYSTEM

18

20

22

14B

16

FIG. 1

FIG-2A

FIG-2B

FIG-2C

AIRCRAFT

10

LEFT ENGINE
14A

ENGINE CONTROLLER
26A

RIGHT ENGINE
14B

ENGINE CONTROLLER
26B

SYSTEM
12

RELAY
32A

RELAY
32B

RUN SWITCH
28A

RUN SWITCH
28B

30

FIG. 3

EP 3 842 347 A1

**USER INPUT DEVICE(S)** 38

40 **INPUT**

42 **AIRCRAFT DATA SYSTEM(S)**

34 **ECO CONTROLLER**

46 **MEMORY(IES)**

48 **INSTRUCTIONS**

44 **PROCESSOR(S)**

36 **SWITCH PANEL**

54A **ENG. SELECT SWITCH**

32A **RELAY**

54B **ENG. SELECT SWITCH**

32B **RELAY**

50 **POWER SWITCH**

52 **POWER SOURCE**

12

_FIG. 4_

*100*

| Receiving data indicative of current speed and a current acceleration of aircraft. |
*102*

↓

| Determine an initiation time to initiate stopping of an engine of the aircraft. |
*104*

↓

| Automatically initiate stopping of the engine at an engine-stop speed. |
*106*

FIG. 5

*200*

*204*

Current Speed
and
Current Acceleration

Desired Engine-Stop
Speed *206*

Response Time *208*

While the aircraft is
accelerating on the ground,
determining an estimated
future speed. *202*

No — Estimated
Future Speed ≈
Desired Engine-
Stop Speed? — Yes

*210*

Initiate stopping of the
engine. *212*

FIG. 8

EP 3 842 347 A1

300

306 — Initial estimated $V_{MCG}$

302 — While the aircraft is accelerating on the ground and is propelled by a plurality of engines, receiving data indicative of current speed and an acceleration of aircraft.

314 — Decreased Estimated $V_{MCG}$

304 — Automatically initiating stopping of the engine at an estimated $V_{MCG}$.

Increased Estimated $V_{MCG}$ — 310

No ← Lateral Deviation too high? → Yes — 308

Yes ← Lateral Deviation too low? — 312

No → Estimated $V_{MCG} \approx V_{MCG}$ — 316

FIG. 7

Europäisches
Patentamt

European
Patent Office

Office européen
des brevets

## EUROPEAN SEARCH REPORT

Application Number

EP 20 21 6401

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 974 965 A1 (BOEING CO [US]) 20 January 2016 (2016-01-20) * abstract; figures 1-3 * * paragraphs [0013], [0014], [0015] * ----- | 1-15 | INV. B64F5/60 F01D21/00 F02C9/44 B64D37/00 |
| X | US 2019/056740 A1 (WESTPHAL JENDRICK [DE] ET AL) 21 February 2019 (2019-02-21) * abstract; figures 1, 4 * ----- | 1 | |
| A | EP 3 333 377 A1 (UNITED TECHNOLOGIES CORP [US]) 13 June 2018 (2018-06-13) * abstract; figures 1, 2 * * paragraphs [0027], [0029] * ----- | 1-15 | |
| | | | TECHNICAL FIELDS SEARCHED (IPC) B64F B64D F01D F02K F02C |

The present search report has been drawn up for all claims

| Place of search | Date of completion of the search | Examiner |
|---|---|---|
| Munich | 3 May 2021 | Podratzky, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 21 6401

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2021

| Patent document cited in search report | | Publication date | Patent family member(s) | | Publication date |
|---|---|---|---|---|---|
| EP 2974965 | A1 | 20-01-2016 | AU 2015202665 | A1 | 04-02-2016 |
| | | | BR 102015016287 | A2 | 28-06-2016 |
| | | | CA 2892718 | A1 | 16-01-2016 |
| | | | CN 105292516 | A | 03-02-2016 |
| | | | EP 2974965 | A1 | 20-01-2016 |
| | | | JP 6539519 | B2 | 03-07-2019 |
| | | | JP 2016022945 | A | 08-02-2016 |
| | | | US 2016017816 | A1 | 21-01-2016 |
| US 2019056740 | A1 | 21-02-2019 | NONE | | |
| EP 3333377 | A1 | 13-06-2018 | EP 3333377 | A1 | 13-06-2018 |
| | | | US 2018149090 | A1 | 31-05-2018 |

EPO FORM P0459

For more details about this annex : see Official Journal of the European Patent Office, No. 12/82